# EUROPEAN PATENT APPLICATION

(11) **EP 4 418 715 A1**
(43) Date of publication of application: **21.08.2024**
(21) Application number: 22880389.6
(22) Date of filing: 13.10.2022
(51) Int. Cl.: H04W 24/02

(54) **CAPABILITY CHANGE METHOD, TERMINAL, AND NETWORK-SIDE DEVICE**

(30) Priority: 14.10.2021 CN 202111200090
(71) Applicant: VIVO MOBILE COMMUNICATION CO., LTD., Dongguan, Guangdong 523863 (CN)
(72) Inventor: BOUBACAR, Kimba Dit Adamou, Guangdong 523863 (CN); YANG, Xiaodong, Guangdong 523863 (CN)
(74) Representative: Murgitroyd & Company
(86) International application number: PCT/CN2022/125184
(87) International publication number: WO 2023/061453

(57) **Abstract**

This application discloses a capability change method, a terminal, and a network-side device, and belongs to the technical field of wireless communication. The capability change method in the embodiments of this application includes: sending, by a first terminal, a first request to a second terminal, the first request being used for requesting to borrow a target capability from the second terminal, and the target capability including at least part of a first capability of the second terminal; receiving, by the first terminal, feedback information returned from the second terminal, the feedback information indicating that the second terminal agrees to lend at least part of the target capability; and reporting, by the first terminal, changed capability information of the first terminal to a network-side device based on a first capability of the first terminal and the borrowed at least part of the target capability.

## Description

### CROSS-REFERENCE TO RELATED APPLICATIONS

The present invention claims the priority of the patent application with the application number 202111200090.5 and entitled "CAPABILITY CHANGE METHOD, TERMINAL, AND NETWORK-SIDE DEVICE" filed to the China Patent Office on October 14, 2021, the entire contents of which are incorporated herein by reference.

### TECHNICAL FIELD

This application belongs to the technical field of wireless communication, and particularly relates to a capability change method, a terminal, and a network-side device.

### BACKGROUND

In existing mechanisms, a user can use multiple user equipment (User Equipment, UEs) to acquire service. However, in the prior art, a UE can only transmit data based on its own capabilities. In a case that the sending power of the UE is limited or the uplink transmission rate is insufficient, the UE cannot borrow the capabilities from other adjacent UE, and thus the business transmission efficiency of the UE cannot be improved.

### SUMMARY

The embodiments of this application provide a capability change method, a terminal, and a network-side device, which can solve the problem that a UE cannot borrow the capabilities from other UE.

In a first aspect, a capability change method is provided, including: sending, by a first terminal, a first request to a second terminal, the first request being used for requesting to borrow a target capability from the second terminal, and the target capability including at least part of a first capability of the second terminal; receiving, by the first terminal, feedback information returned from the second terminal, the feedback information indicating that the second terminal agrees to lend at least part of the target capability; and reporting, by the first terminal, changed capability information of the first terminal to a network-side device based on a first capability of the first terminal and the borrowed at least part of the target capability.

In a second aspect, a capability change apparatus is provided, including: a first sending module, configured to send a first request to a second terminal, the first request being used for requesting to borrow a target capability from the second terminal, and the target capability including at least part of a first capability of the second terminal; a first receiving module, configured to receive feedback information returned from the second terminal, the feedback information indicating that the second terminal agrees to lend at least part of the target capability; and a reporting module, configured to report changed capability information of the first terminal to a network-side device based on a first capability of the first terminal and the borrowed at least part of the target capability.

In a third aspect, a capability change method is provided, including: receiving, by a second terminal, a first request sent from a first terminal, the first request being used for requesting to borrow a target capability from the second terminal, and the target capability including at least part of a first capability of the second terminal; returning, by the second terminal, feedback information to the first terminal, the feedback information indicating one of the following that: the second terminal rejects the request of the first terminal, and the second terminal agrees to lend at least part of the target capability.

In a fourth aspect, a capability change apparatus is provided, including: a second receiving module, configured to receive a first request sent from a first terminal, the first request being used for requesting to borrow a target capability from the second terminal, and the target capability including at least part of a first capability of the second terminal; and a second sending module, configured to return feedback information to the first terminal, the feedback information indicating one of the following: rejection to the request of the first terminal, and agreement to lend at least part of the target capability.

In a fifth aspect, a capability change method is provided, including: receiving, by a network-side device, changed capability information reported by a first terminal, the changed capability information including: a first capability of the first terminal, and at least part of a first capability borrowed by the first terminal from a second terminal.

In a sixth aspect, a capability change apparatus is provided, including: a third receiving module, configured to receive changed capability information reported by a first terminal, the changed capability information including: a first capability of the first terminal, and at least part of a first capability borrowed by the first terminal from a second terminal; and an acquiring module, configured to acquire the changed capability information of the first terminal.

In a seventh aspect, a terminal is provided, including a processor, a memory, and a program or instruction stored in the memory and executable on the processor, the program or instruction, when executed by the processor, implementing steps of the method according to the first aspect, or implementing steps of the method according to the third aspect.

In an eighth aspect, a terminal is provided, including a processor and a communication interface, the processor being configured to implement the steps of the method according to the first aspect, or implement the steps of the method according to the third aspect, and the communication interface being configured to communicate with a network-side device.

In a ninth aspect, a network-side device is provided, including a processor, a memory, and a program or instruction stored in the memory and executable on the processor, the program or instruction, when executed by the processor, implementing steps of the method according to the fifth aspect.

In a tenth aspect, a network-side device is provided, including a processor and a communication interface, the processor being configured to implement the steps of the method according to the fifth aspect, and the communication interface being configured to communicate with UE.

In an eleventh aspect, a readable storage medium is provided, storing a program or instruction on the readable storage medium, the program or instruction, when executed by a processor, implementing the steps of the method according to the first aspect, or implementing the steps of the method according to the third aspect, or implementing the steps of the method according to the fifth aspect.

In a twelfth aspect, a chip is provided, including a processor and a communication interface, the communication interface being coupled with the processor, and the processor being configured to execute a program or instruction, to implement the steps of the method according to the first aspect, or to implement the steps of the method according to the third aspect, or to implement the steps of the method according to the fifth aspect.

In a thirteenth aspect, a computer program/program product is provided, the computer program/program product being stored in a non-transient storage medium, and the program/program product being executed by at least one processor to implement the steps of the method according to the first aspect, or to implement the steps of the method according to the third aspect, or to implement the steps of the method according to the fifth aspect.

In the embodiments of this application, the first terminal may send the first request to the second terminal in a case that the first terminal needs to borrow a target capability from the second terminal, and the first terminal reports changed capability information to the network-side device based on a first capability of the first terminal and the borrowed at least part of the target capability upon reception of agreement returned from the second terminal to lend at least part of the target capability. Therefore, the network-side device may update the first capability of the first terminal, and the first terminal performs data transmission by means of the borrowed at least part of the target capability from the second terminal, thereby improving the business transmission efficiency.

### BRIEF DESCRIPTION OF THE DRAWINGS

FIG. 1 is a schematic diagram of a wireless communication system to which the embodiments of this application can be applied;
FIG. 2 is a schematic flowchart of a capability change method provided in an embodiment of this application;
FIG. 3 is another schematic flowchart of a capability change method provided in an embodiment of this application;
FIG. 4 is another schematic flowchart of a capability change method provided in an embodiment of this application;
FIG. 5 is another schematic flowchart of a capability change method provided in an embodiment of this application;
FIG. 6 is another schematic flowchart of a capability change method provided in an embodiment of this application;
FIG. 7 is a schematic structural diagram of a capability change apparatus provided in an embodiment of this application;
FIG. 8 is another schematic structural diagram of a capability change apparatus provided in an embodiment of this application;
FIG. 9 is another schematic structural diagram of a capability change apparatus provided in an embodiment of this application;
FIG. 10 is a schematic structural diagram of a communication device provided in an embodiment of this application;
FIG. 11 is a schematic diagram of a hardware structure of a terminal provided in an embodiment of this application; and
FIG. 12 is a schematic diagram of a hardware structure of a network-side device provided in an embodiment of this application.

### DETAILED DESCRIPTION

The technical solutions in the embodiments of this application are clearly described in the following with reference to the accompanying drawings in the embodiments. Apparently, the described embodiments are merely part rather than all of the embodiments of this application. All other embodiments obtained by those of ordinary skill in the art based on the embodiments of this application fall within the protection scope of this application.

In the specification and claims of this application, the terms such as "first" and "second" are used for distinguishing similar objects, rather than describing a specific sequence or order. It is to be understood that the terms used in such a way are exchangeable where appropriate, so that the embodiments of this application can be implemented in an order different from those shown or described herein. The objects distinguished by "first" and "second" are usually of the same class, and the number of the objects is not limited, for example, the number of the first object may be one or multiple. In addition, in the specification and claims, "and/or" indicates at least one of the connected objects, and the character "/" generally indicates that the associated objects are in an "or" relationship.

It is worth noting that the technology described in the embodiments of this application is not limited to long term evolution (Long Term Evolution, LTE)/LTE-advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) and other systems. The terms "system" and "network" in the embodiments of this application are often interchangeably used, and the described technology can be applied to the systems and radio technologies mentioned above, and can also be applied to other systems and radio technologies. A new radio (New Radio, NR) system is described in the following as an example, and the NR term is used in most of the following descriptions. However, these technologies can also be applied to applications other than the NR system, e.g., the 6^{th} generation (6^{th} Generation, 6G) communication system.

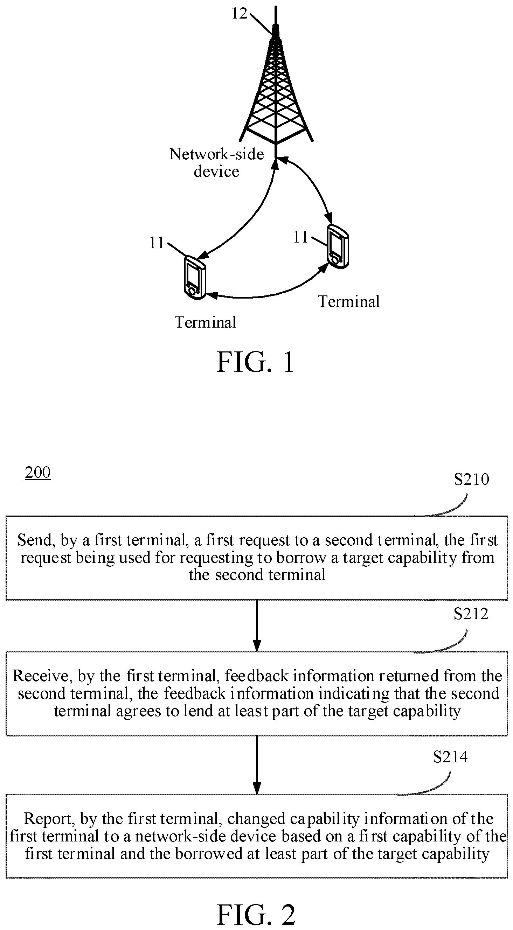

FIG. 1 is a schematic diagram of a wireless communication system to which the embodiments of this application can be applied. The wireless communication system includes a terminal 11 and a network-side device 12. The terminal 11 may also be referred to as a terminal device, or user equipment (User Equipment, UE), or a user terminal, and the terminal 11 may be a mobile phone, a tablet personal computer (Tablet Personal Computer), a laptop computer (Laptop Computer) or also known as a notebook computer, a personal digital assistant (Personal Digital Assistant, PDA), a hand-held computer, a netbook, an ultra-mobile personal computer (Ultra-Mobile Personal Computer, UMPC), a mobile Internet device (Mobile Internet Device, MID), a wearable device (Wearable Device) or a vehicle user equipment (VUE), a pedestrian user equipment (PUE), and other terminal-side devices, where the wearable devices include: smart watches, wristbands, headphones, glasses, etc. It is to be noted that the specific type of the terminal 11 is not limited in the embodiments of this application. The network-side device 12 may be a base station or core network, and the base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a wireless local area network (Wireless Local Area Network, WLAN) access point, a wireless fidelity (Wireless Fidelity, WiFi) node, a transmitting receiving point (Transmitting Receiving Point, TRP), or some other appropriate term in the art. As long as the same technical effect is achieved, the base station is not limited to specific technical terms. It is to be noted that in the embodiments of this application, a base station in an NR system is taken only as an example, but the specific type of the base station is not limited.

The capability change method provided in the embodiments of this application will be described in detail below with reference to the accompanying drawings and through some embodiments and application scenarios thereof.

FIG. 2 is a schematic flowchart of a capability change method in an embodiment of this application, and the method 200 may be executed by a first terminal. In other words, the method may be executed by software or hardware installed on the first terminal. As shown in FIG. 2, the method may include the following steps:

S210: A first terminal sends a first request to a second terminal, where the first request is used for requesting to borrow a target capability from the second terminal, and the target capability includes at least part of a first capability of the second terminal.

In this embodiment of this application, the first terminal may borrow a capability from the second terminal in a case that the first terminal and the second terminal need to collaborate to improve the user transmission rate. For example, the first terminal may send the first request to the second terminal in a case that the sending power is limited or the uplink transmission rate is insufficient.

In this embodiment of this application, the first capability may be a relevant function for achieving assisted transmission, for example, the first capability includes, but is not limited to, an antenna capability and/or a hardware processing capability.

In a possible implementation, the first terminal may request a network-side device to allow the first terminal to change a capability before sending the first request to the second terminal. Therefore, before S210, the method may further include: the first terminal sends a second request to the network-side device, where the second request is used for requesting a change in a first capability of the first terminal. For example, the first terminal requests the network-side device to allow for the change in the capability of the first terminal. For example, the first terminal requests a network to allow a change in the antenna capability, e.g., increasing or decreasing the quantity of antennas.

The antenna capability includes, but is not limited to, at least one of the following:
(1) a quantity of receive antennas (Rx (Receive) Number);
(2) a quantity of transmit antennas (Tx (Transmit) Number);
(3) data of transceiver antennas (TRX (Transceiver) Number), for example, 2 TRX or 1 TRX; and
(4) a quantity of multiple-input multiple-output (Multiple-Input Multiple-Output, MIMO) layers (MIMO Layers).

In the above possible implementation, the network-side device may respond to the request and return a response message to the first terminal after receiving the second request. The response message may indicate the range of change in the first capability of the first terminal, that is, the network-side device configures the range within which the first terminal is allowed to change the capability. For example, the network-side device allows the first terminal to change the quantity of antennas in a range of 2 to 8. Therefore, in a possible implementation, the method may further include: the response message returned from the network-side device is received, where the response message indicates the range of change in the first capability of the first terminal.

Or, the returned response message may indicate the range of a capability that the second terminal can lend in a case that the network-side device responds to the second request, and the response message implicitly indicates that the first terminal is allowed to change the capability. For example, it means that the first terminal is allowed to increase 2 antennas in a case that the response message returned from the network-side device indicates that the second terminal can lend 2 antennas.

Or, the response message returned from the network-side device may also indicate the range of change in the first capability of the first terminal and the range of a capability that the second terminal can lend. For example, the first terminal may determine the target capability requested by the first request based on the response message in a case that the response message indicates that the first terminal is allowed to change the quantity of antennas in a range of 2 to 8 and the second terminal can lend 2 antennas.

In a possible implementation, the sum of the first capability of the first terminal and the requested target capability is within the range of change in a case that the response message indicates the range of change in the first capability of the first terminal. For example, the first terminal can borrow at most 4 antennas from the second terminal in a case that the response message indicates that the first terminal is allowed to change the quantity of antennas in a range of 2 to 8 and the first terminal includes 4 antennas.

Optionally, in a case that the response message indicates the range of a capability that the second terminal can lend, the target capability requested by the first request is within the range of the capability. For example, the first terminal can request to borrow at most 2 antennas from the second terminal in a case that the response message indicates that the second terminal can lend 2 antennas.

S212: The first terminal receives feedback information returned from the second terminal, where the feedback information indicates that the second terminal agrees to lend at least part of the target capability.

In this embodiment of this application, the second terminal may determine whether to agree to the request of the first terminal based on the condition of the second terminal after receiving the first request sent from the first terminal. For example, the second terminal may agree to the request of the first terminal in a case that the second terminal currently does not need to transmit data. Or, the second terminal may also agree to the request of the first terminal or part of the request of the first terminal in a case that the second terminal currently needs to transmit data but the second terminal has surplus capability while performing the current business transmission. Or, the second terminal may also stop or suspend the current business and lend all of the first capability to the first terminal in a case that the first terminal requests to borrow all of the first capability from the second terminal.

For example, feedback information received by the first terminal indicates that the second terminal agrees to lend 2 antennas in a case that the first request sent from the first terminal requests to borrow 4 antennas from the second terminal and the second terminal agrees to lend 2 antennas based on the condition of the second terminal.

S214: The first terminal reports changed capability information of the first terminal to a network-side device based on a first capability of the first terminal and the borrowed at least part of the target capability.

In this embodiment of this application, the first terminal reports the changed capability information of the first terminal to the network-side device after receiving feedback from the second terminal agreeing or partially agreeing to the request of the first terminal. The reported capability information may be the sum of the first capability of the first terminal and the at least part of the target capability. For example, the first terminal reports the final antenna value of the changed antenna capability of the first terminal to the network-side device, where the final antenna value is sum of the quantity of antennas of the first terminal and the quantity of antennas lent by the second terminal to the first terminal.

In a possible implementation, the network-side device may reconfigure the first terminal based on the changed capability information reported by the first terminal after receiving the changed capability information. Therefore, the method may further include: the first terminal receives a reconfiguration message sent from the network-side device and performs reconfiguration based on the reconfiguration message. For example, the network-side device sends the reconfiguration message for reconfiguring the antenna capability of the first terminal, that is, configuring the antenna capability of the first terminal to the changed final antenna value, in a case that the first terminal requests to borrow the antenna capability from the second terminal.

In this embodiment of this application, the network-side device may schedule based on the changed capability information after reconfiguring the antenna capability of the first terminal. During scheduling, the network-side devices may schedule data blocks for the first terminal and the second terminal respectively. The first terminal performs transmission via resources scheduled for the first terminal by the network-side device, and the second terminal performs transmission via resources scheduled for the second terminal by the network-side device.

In this embodiment of this application, the first terminal and the second terminal communicate with each other via an inter-terminal interface. The inter-terminal interface has a fast transmission rate and may be considered as data transmission within one terminal. For example, the transmission time between the first terminal and the second terminal may reach nanoseconds via a wired connection, and the first terminal and the second terminal transmit independent data packets to the network-side device respectively. In specific application, the first terminal and the second terminal may send the same data packet to improve the reliability of data transmission. Or, the first terminal and the second terminal may send different data packets, for example, data packets numbered 1, 3, 5, etc. are sent by the first terminal and data packets numbered 2, 4, 6, etc. are sent by the second terminal, to improve the efficiency of data transmission.

By the technical solution provided in this embodiment of this application, the first terminal may send a first request to the second terminal in a case that the first terminal needs to borrow a target capability from the second terminal, and the first terminal reports changed capability information to a network-side device based on a first capability of the first terminal and the borrowed at least part of the target capability upon reception of agreement returned from the second terminal to lend at least part of the target capability. Therefore, the network-side device may update the first capability of the first terminal, and the first terminal performs data transmission by means of the borrowed at least part of the target capability from the second terminal, thereby improving the business transmission efficiency.

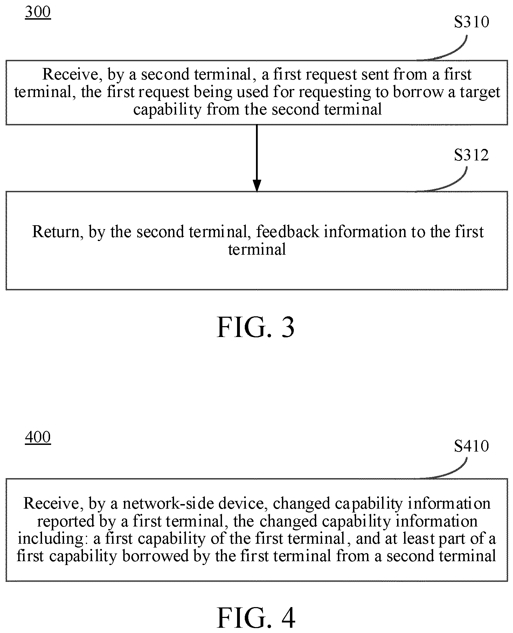

FIG. 3 is another flowchart of a capability change method provided in an embodiment of this application, and the method 300 may be executed by a second terminal. In other words, the method may be executed by software or hardware installed on the second terminal. As shown in FIG. 3, the method may include the following steps.

S310: A second terminal receives a first request sent from a first terminal, where the first request is used for requesting to borrow a target capability from the second terminal, and the target capability includes at least part of a first capability of the second terminal.

The first terminal may send the first request in the manner described in the method 200, which will not be repeated here. Please refer to the description in the method 200 for details.

S312: The second terminal returns feedback information to the first terminal, where the feedback information indicates one of the following that: the second terminal rejects the request of the first terminal, and the second terminal agrees to lend at least part of the target capability.

In this embodiment of this application, the second terminal may determine whether to agree to the request of the first terminal based on the condition of the second terminal after receiving the first request sent from the first terminal. For example, the second terminal may agree to the request of the first terminal in a case that the second terminal currently does not need to transmit data. Or, the second terminal may also agree to the request of the first terminal or part of the request of the first terminal in a case that the second terminal currently needs to transmit data but the second terminal has surplus capability while performing the current business transmission. Or, the second terminal may also stop or suspend the current business and lend all of the first capability to the first terminal in a case that the first terminal requests to borrow all of the first capability from the second terminal.

Optionally, the feedback information further indicates the capability value lent to the first terminal in a case that the second terminal agrees to lend at least part of the target capability.

For example, feedback information received by the first terminal indicates that the second terminal agrees to lend 2 antennas in a case that the first request sent from the first terminal requests to borrow 4 antennas from the second terminal and the second terminal agrees to lend 2 antennas based on the condition of the second terminal.

In a possible implementation, in order that the network-side device learns about the changes in the capability of the second terminal and facilitate the network-side device to schedules the second terminal, optionally, in a case that the second terminal agrees to lend at least part of the target capability, the method may further include: the second terminal sends indication information to the network-side device, where the indication information indicates a reduction in the first capability of the second terminal, and the indication information indicates the capability value of the at least part of the target capability.

After receiving the indication information sent from the second terminal, the network-side device may send feedback confirmation to the second terminal based on the indication information to indicate that the network-side device has received the indication of the second terminal. Therefore, in the above possible implementation, optionally, after the second terminal sends the indication information to the network-side device, the method further includes: the second terminal receives feedback confirmation returned from the network-side device.

For example, the second terminal may send the indication information to the network-side device to indicate a reduction in the first capability of the second terminal, in a case that the second terminal receives the first request from the first terminal in an idle state and the second terminal agrees to lend the target capability to the first terminal since the second terminal currently needs not to transmit business.

In a possible implementation, the network-side device may configure a variable range of the first capability of the second terminal. After receiving the first request from the first terminal, the second terminal may determine whether the network-side device allows the second terminal to lend the first capability to other terminals based on the variable range. Therefore, in this possible implementation, before the second terminal returns the feedback information to the first terminal, the method may further include: the second terminal acquires configuration information, where the configuration information includes a variable range of the first capability of the second terminal. The second terminal may determine whether to lend the first capability requested by the first terminal based on the variable range and the capability of the second terminal.

For example, the second terminal determines not to lend antennas to the first terminal and thus may reject the request of the first terminal in a case that the variable range of the quantity of antennas configured for the second terminal is 2 to 4 according to the configuration information and the second terminal includes 2 antennas.

In the above possible implementation, in a case that the second terminal determines to lend at least part of the target capability to the first terminal, in order to ensure consistency of understanding between the network-side device and the second terminal, optionally, before the second terminal returns the feedback information to the first terminal, the method may further include: the second terminal sends a capability change request to the network-side device based on the first capability of the second terminal, the variable range and the target capability requested by the first request, where the capability change request is used for requesting for reducing the first capability of the second terminal; and the second terminal receives a reconfiguration message from the network-side device, and performs reconfiguration based on the reconfiguration message.

For example, a capability change request is sent to the network-side device to request for reducing the quantity of antennas of the second terminal, in a case that the second terminal currently performs business transmission, the variable range of the quantity of antennas configured by the network-side device for the second terminal is 2 to 8, the second terminal includes 4 antennas, the first terminal requests to borrow 2 antennas, and the second terminal determines to lend part of the antennas to the first terminal. The network-side device may send a reconfiguration message to the second terminal to reconfigure the quantity of the antennas of the second terminal to 2 in a case that the network-side device determines that the quantity of the antennas of the second terminal can be reduced to 2 after receiving the capability change request from the second terminal.

In the above possible implementation, before the second terminal returns the feedback information to the first terminal, optionally, the method may further include: the second terminal determines the feedback information returned to the first terminal based on the first capability of the second terminal and the reconfiguration message.

For example, in the above example, the second terminal determines to lend 2 antennas to the first terminal in a case that the quantity of antennas of the second terminal is reconfigured to 2 according to the reconfiguration message sent to the second terminal from the network-side device. Therefore, the feedback information returned to the first terminal indicates agreement to lend 2 antennas to the first terminal.

Of course, without limitation, the second terminal may also directly determine the capability value lent to the first terminal. For example, in the above possible implementation, a reduction value in the first capability of the second terminal (i.e. the capability value of the first capability lent to the first terminal) may be indicated in the capability change request in a case that the second terminal sends a capability change request to the network-side device. After receiving the capability change request, the network-side device reconfigures the first capability of the second terminal based on the reduction value.

In the above possible implementation, the network-side device may release connection of the second terminal in a case that the second terminal agrees to lend all of the first capability to the first terminal. For example, the network-side device releases connection of the second terminal in a case that the second terminal lends all of the antennas to the first terminal.

By the method provided in this embodiment of this application, the second terminal may return feedback information to the first terminal upon reception of a request from the first terminal for borrowing a target capability from the second terminal. The feedback information may indicate that the second terminal rejects the request of the first terminal, or that the second terminal agrees to lend at least part of the target capability. Thus, the first capability of the second terminal can be lent to the first terminal to realize common transmission of the first terminal and the second terminal, and ensure the business transmission efficiency of the first terminal and the utilization rate of the capability of the second terminal.

FIG. 4 is another flowchart of a capability change method provided in an embodiment of this application, and the method 400 may be performed by a network-side device. In other words, the method may be performed by software or hardware installed on the network-side device. As shown in FIG. 4, the method may include the following steps.

S410: The network-side device receives changed capability information reported by a first terminal, where the changed capability information includes: a first capability of the first terminal, and at least part of a first capability borrowed by the first terminal from a second terminal.

This embodiment of this application is an implementation of the network-side device corresponding to the method 200 and the method 300, and may use the implementations corresponding to the method 200 and the method 300.

Specifically, the first terminal may report the changed capability information according to the description in the method 200 and will not be repeated here. Please refer to the relevant description in the method 200 for details.

In a possible implementation, after the network-side device receives the changed capability information reported by the first terminal, the method further includes: the network-side device reconfigures the first terminal based on the changed capability information. For example, the network-side device may configure the first capability of the first terminal to the changed capability value, that is, the first capability of the first terminal and the at least part of the first capability borrowed by the first terminal from the second terminal.

In a possible implementation, before the network-side device receives the changed capability information reported by the first terminal, the method further includes: the network-side device receives a second request sent from the first terminal, where the second request is used for requesting a change in the first capability of the first terminal, and the second request carries identification information of the second terminal.

In the above possible implementation, the second request is the same as that in the method 200, which will not be repeated here. Please refer to the description in the method 200 for details.

In the above possible implementation, after the network-side device receives the second request sent from the first terminal, the method further includes:

the network-side device returns a response message to the first terminal, where the response message indicates at least one of the following: the range of change in the first capability of the first terminal, and the range of a capability that the second terminal can lend.

In a possible implementation, before the network-side device receives the changed capability information reported by the first terminal, the method further includes: indication information sent from the second terminal is received, where the indication information indicates a reduction in the first capability of the second terminal, and the indication information indicates the capability value of the at least part of the target capability; and feedback confirmation is returned to the second terminal.

In the above possible implementation, the second terminal may send the indication information according to the relevant description in the method 300, and the indication information is the same as that in the method 300, which will not be repeated here. Please refer to the description in the method 300 for details.

In a possible implementation, before the network-side device receives the changed capability information reported by the first terminal, the method further includes: the network-side device configures configuration information of the second terminal, where the configuration information includes a variable range of the first capability of the second terminal.

In the above possible implementation, optionally, before the network-side device receives the changed capability information reported by the first terminal, the method further includes: a capability change request sent from the second terminal is received, where the capability change request is used for requesting for reducing the first capability of the second terminal; and a reconfiguration message is sent to the second terminal based on the capability change request, where the reconfiguration message is used for reconfiguring the first capability of the second terminal.

In a possible implementation, the method may further include: connection of the second terminal is released in a case that the first terminal borrows all the first capability from the second terminal. Due to the second terminal lending all of the first capability to the first terminal, the connection of the second terminal cannot be performed. Therefore, the network-side device releases the connection of the second terminal.

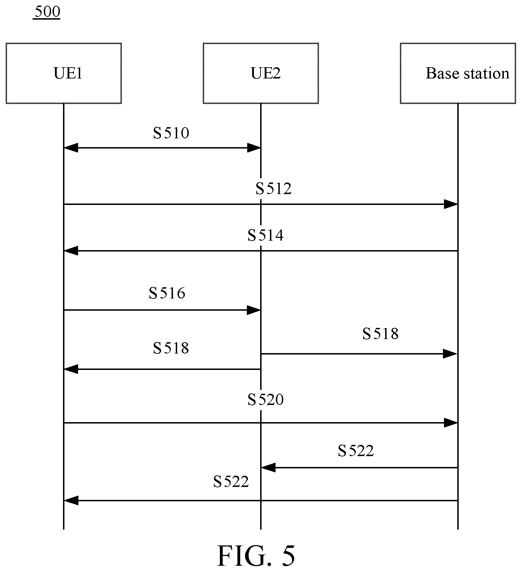

FIG. 5 is another schematic flowchart of a capability change method provided in an embodiment of this application. As shown in FIG. 5, the method 500 mainly includes the following steps.

S510: UE1 and UE2 exchange antenna capability information in a case that UE1 needs to borrow the antenna capability from UE2.

S512: UE1 sends a request message to a base station, where the request message requests a change in antenna capability and may include relevant information about UE2, e.g., UE2 ID.

S514: The base station responds to UE1 and indicates a variable range of the antenna capability of UE1, e.g., a variable range of the quantity of antennas of UE1 is 2 to 8.

S516: UE1 requests to borrow all antennas of UE2 from UE2 after receiving feedback from the base station, where the sent request message may include the quantity of antennas that UE1 needs to borrow.

S518: UE2 receives the request from UE1, and UE2 may:
(1) agree to the request of UE1;
(2) disagree the request of UE1; and
(3) agree to part of the request of UE1.

In a case that UE2 agrees or partly agrees to the request of UE1, the UE2 may further:
(1) indicate the base station to reduce the antenna capability and lend antennas to UE1; the base station may send feedback confirmation to UE2 the reduction in the antenna capability in a case that the indication of the UE2 is received; and/or,
(2) send feedback to UE1 the quantity of borrowed antenna.

S520: The UE1 reports the final antenna value of the changed antenna capability of UE1 in a case that UE1 receives the feedback from UE2 agreeing or partly agreeing the request of UE1, where the final antenna value is the quantity of antennas of UE1 and the quantity of antennas lent from UE2 to UE1.

S522: The base station receives reporting information from UE1, and the base station may:
(1) reconfigure the antenna capabilities of UE1 and UE2; and
(2) release connection of UE2.

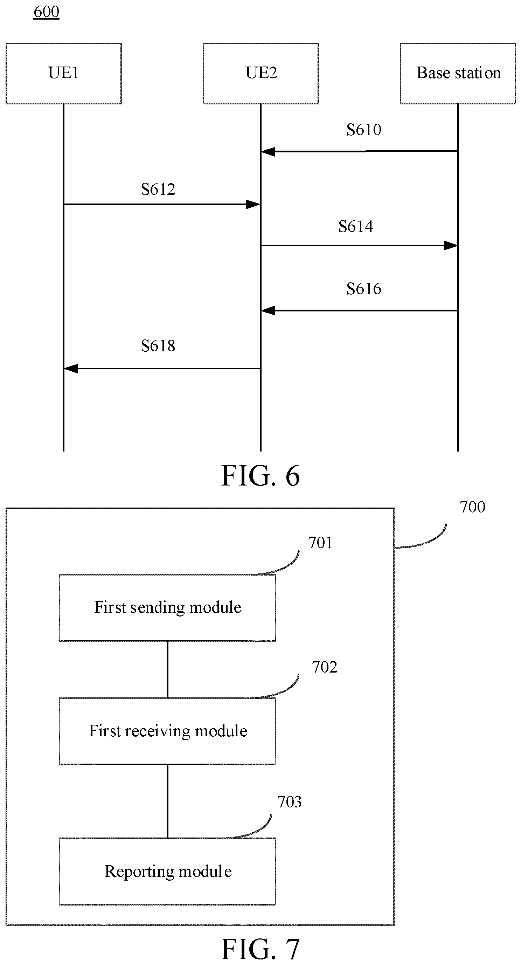

FIG. 6 is another schematic flowchart of a capability change method provided in an embodiment of this application. As shown in FIG. 6, the method 600 mainly includes the following steps.

S610: A base station configures a variable range of a capability of UE2.

S612: UE1 requests to borrow part or all of the capability of UE2.

S614: UE2 requests a base station for a capability change.

The capability change value is determined by: the capability of UE2, a variable range of the capability, and the UE1 request.

S616: The base station configures UE2.

S618: UE2 responds to the request of UE1. For example, UE2 sends feedback information to UE1 to indicate agreement to lend part or all of the capability.

By the technical solution provided in this embodiment of this application, multiple UEs may borrow antenna capabilities from each other, so that multiple devices can implement transmission together under the control of the network side, ensuring the business experience and system efficiency of the UE.

It is to be noted that the capability change method provided in this embodiment of this application may be executed by a capability change apparatus, or by a control module configured to execute the capability change method in the capability change apparatus. In this embodiment of this application, the capability change method executed by the capability change apparatus is taken as an example to illustrate the capability change apparatus provided in this embodiment of this application.

FIG. 7 is a schematic structural diagram of a capability change apparatus provided in an embodiment of this application. As shown in FIG. 7, the apparatus 700 mainly includes: a first sending module 701, a first receiving module 702 and a reporting module 703.

In this embodiment of this application, the first sending module 701 is configured to send a first request to a second terminal, where the first request is used for requesting to borrow a target capability from the second terminal, and the target capability includes at least part of a first capability of the second terminal; the first receiving module 702 is configured to receive feedback information returned from the second terminal, where the feedback information indicates that the second terminal agrees to lend at least part of the target capability; and the reporting module 703 is configured to report changed capability information of the first terminal to a network-side device based on a first capability of the first terminal and the borrowed at least part of the target capability.

In a possible implementation, the first sending module 701 is further configured to: send a second request to the network-side device before sending a first request to a second terminal, where the second request is used for requesting a change in the first capability of the first terminal.

In a possible implementation, the second request carries identification information of the second terminal.

In a possible implementation, the first receiving module 702 is further configured to: receive a response message returned from the network-side device, where the response message indicates at least one of the following: the range of change in the first capability of the first terminal, and the range of a capability that the second terminal can lend.

In a possible implementation, the sum of the first capability of the first terminal and the requested target capability is within the range of change; and/or, the target capability requested by the first request is within the range of the capability.

In a possible implementation, the first capability includes one of the following: an antenna capability and a hardware processing capability.

In a possible implementation, the antenna capability includes at least one of the following:
a quantity of receive antennas;
a quantity of transmit antennas;
data of transceiver antennas; and
a quantity of MIMO layers.

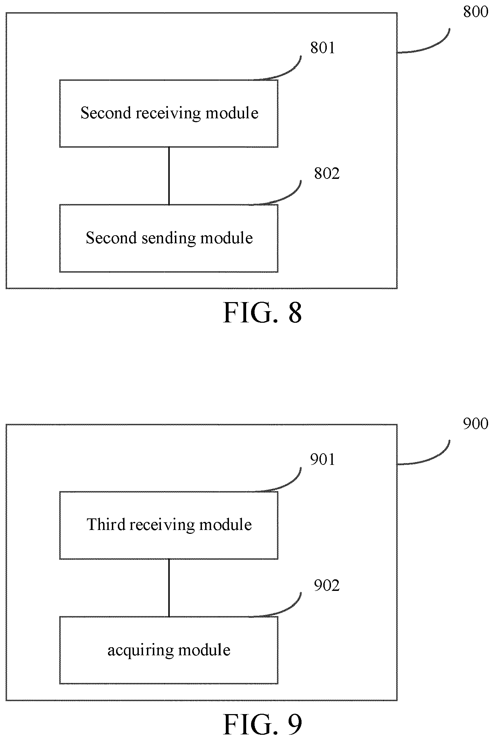

FIG. 8 is another schematic structural diagram of a capability change apparatus provided in an embodiment of this application. As shown in FIG. 8, the apparatus 800 mainly includes: a second receiving module 801 and a second sending module 802.

In this embodiment of this application, the second receiving module 801 is configured to receive a first request sent from a first terminal, where the first request is used for requesting to borrow a target capability from the second terminal, and the target capability includes at least part of a first capability of the second terminal; and the second sending module 802 is configured to return feedback information to the first terminal, where the feedback information indicates one of the following that: rejection to the request of the first terminal, and agreement to lend at least part of the target capability.

In a possible implementation, the second sending module 802 is further configured to send indication information to the network-side device in a case that the second terminal agrees to lend at least part of the target capability, where the indication information indicates a reduction in the first capability of the second terminal, and the indication information indicates the capability value of the at least part of the target capability.

In a possible implementation, the second receiving module 801 is further configured to receive feedback confirmation returned from the network-side device.

In a possible implementation, the apparatus may further include: a first acquiring module, configured to acquire configuration information, where the configuration information includes a variable range of the first capability of the second terminal.

In a possible implementation, the second sending module 802 is further configured to send a capability change request to the network-side device based on the first capability of the second terminal, the variable range and the target capability requested by the first request, where the capability change request is used for requesting for reducing the first capability of the second terminal; and the second receiving module 801 is further configured to receive a reconfiguration message from the network-side device, and perform reconfiguration based on the reconfiguration message.

In a possible implementation, returning, the second sending module 802, feedback information to the first terminal includes: returning the feedback information to the first terminal based on the first capability of the second terminal and the reconfiguration message.

In a possible implementation, the feedback information further indicates the capability value lent to the first terminal in a case that the second terminal agrees to lend at least part of the target capability.

FIG. 9 is another schematic structural diagram of a capability change apparatus provided in an embodiment of this application. As shown in FIG. 9, the apparatus 900 mainly includes: a third receiving module 901 and a second acquiring module 902.

In this embodiment of this application, the third receiving module 901 is configured to receive changed capability information reported by a first terminal, where the changed capability information includes: a first capability of the first terminal, and at least part of a first capability borrowed by the first terminal from a second terminal; and the second acquiring module 902 is configured to acquire the changed capability information of the first terminal.

In a possible implementation, the apparatus further includes: a reconfiguration module, configured to reconfigure the first terminal based on the changed capability information.

In a possible implementation, the third receiving module 901 is further configured to receive a second request sent from the first terminal before receiving changed capability information reported by the first terminal, where the second request is used for requesting a change in the first capability of the first terminal, and the second request carries identification information of the second terminal.

In a possible implementation, the apparatus further includes: a third sending module, configured to return a response message to the first terminal, where the response message indicates at least one of the following: the range of change in the first capability of the first terminal, and the range of a capability that the second terminal can lend.

In a possible implementation, the third receiving module 901 is further configured to receive indication information sent from the second terminal before receiving changed capability information reported by the first terminal, where the indication information indicates a reduction in the first capability of the second terminal, and the indication information indicates the capability value of the at least part of the target capability; and the third sending module is further configured to return feedback confirmation to the second terminal.

In a possible implementation, the reconfiguration module is further configured to configure configuration information of the second terminal, where the configuration information includes a variable range of the first capability of the second terminal.

In a possible implementation, the third receiving module 901 is further configured to receive a capability change request sent from the second terminal, where the capability change request is used for requesting for reducing the first capability of the second terminal; and the reconfiguration module is further configured to send a reconfiguration message to the second terminal based on the capability change request, where the reconfiguration message is used for reconfiguring the first capability of the second terminal.

In a possible implementation, the apparatus further includes: a release module, configured to release connection of the second terminal in a case that the first terminal borrows all the first capability from the second terminal.

The capability change apparatus in this embodiment of this application may be an apparatus, and may also be a component, integrated circuit, or chip in a terminal or network-side device. The apparatus may be a mobile terminal or a non-mobile terminal. For example, the mobile terminal may include, but is not limited to, the types of terminals 11 listed above, and the non-mobile terminal may be a server, a network attached storage (Network Attached Storage, NAS), a personal computer (personal computer, PC), a television (television, TV), an automatic teller machine, or a self-service machine, etc., which is not specifically limited in this embodiment of this application.

The capability change apparatus in this embodiment of this application may be an apparatus having an operating system. The operating system may be an Android (Android) operating system, an ios operating system, or other possible operating systems, which is not specifically limited in this embodiment of this application.

The capability change apparatus provided in this embodiment of this application can implement the processes implemented by the method embodiments in FIG. 2 to FIG. 6, and achieve the same technical effects. Details will not be repeated here to avoid repetition.

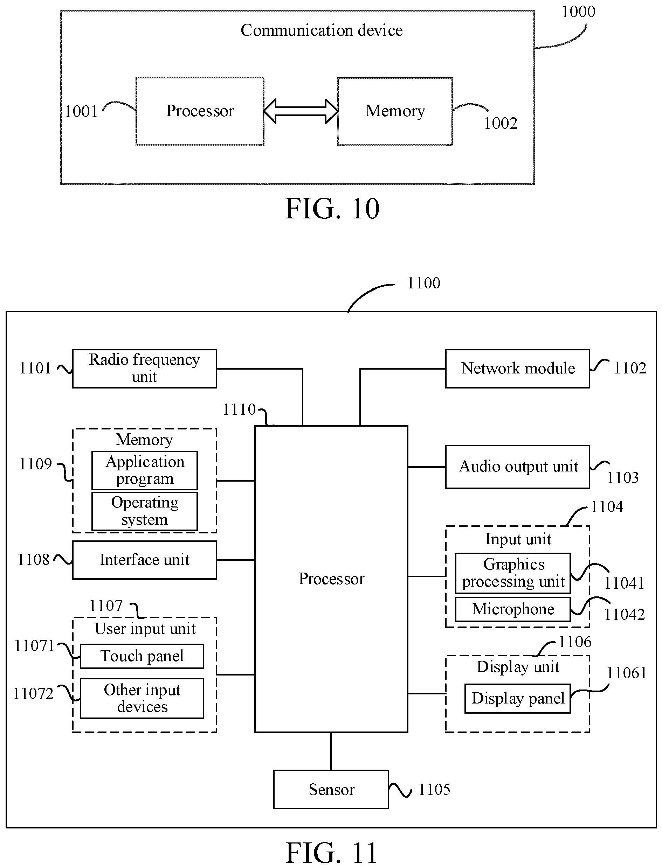

Optionally, as shown in FIG. 10, an embodiment of this application further provides a communication device 1000, including a processor 1001, a memory 1002, a program or instruction stored in the memory 1002 and executable on the processor 1001. For example, the program or instruction, when executed by the processor 1001, implements the processes in the embodiment of the above capability change method 200 or 300 in a case that the communication device 1000 is a terminal, and the same technical effects can be achieved. The program or instruction, when executed by the processor 1001, implements the processes in the embodiment of the above capability change method 400 in a case that the communication device 1000 is a network-side device, and the same technical effects can be achieved. Details will not be repeated here to avoid repetition.

An embodiment of this application further provides a terminal, including a processor and a communication interface, where the processor is configured to implement the processes in the embodiment of the above capability change method 200 or 300, and the communication interface is configured to communicate with an external device. This terminal embodiment corresponds to the above terminal side method embodiments, and the implementation processes and methods of the above method embodiments are all applicable to this terminal embodiment, and the same technical effects can be achieved. Specifically, FIG. 11 is a schematic diagram of a hardware structure of the terminal in this embodiment of this application.

The terminal 1100 includes, but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, and other components.

Those skilled in the art may understand that the terminal 1100 may further include a power supply (such as a battery) for supplying power to the components, and the power supply may be logically connected to the processor 1110 via a power management system, thereby implementing functions such as charging, discharging and power consumption management via the power management system. The terminal structure shown in FIG. 11 does not constitute a limitation to the terminal, and the terminal may include more or fewer components than those shown in the figure, or some components may be combined, or different component layouts may be used, which will not be repeated here.

It is to be understood that in this embodiment of this application, the input unit 1104 may include a graphics processing unit (Graphics Processing Unit, GPU) 11041 and a microphone 11042. The graphics processing unit 11041 processes image data of a static picture or a video that is acquired by an image capture apparatus (e.g., a camera) in a video capture mode or image capture mode. The display unit 1106 may include a display panel 11061, and the display panel 11061 may be configured in the form of a liquid crystal display, an organic light-emitting diode, or the like. The user input unit 1107 includes a touch panel 11071 and other input devices 11072. The touch panel 11071 is also known as a touch screen. The touch panel 11071 may include two parts: a touch detection apparatus and a touch controller. The other input devices 11072 may include, but is not limited to, a physical keyboard, a functional key (e.g., a volume control key and a switch key), a trackball, a mouse and a joystick, which will not be repeated here.

In this embodiment of this application, after the radio frequency unit 1101 receives downlink data from a network-side device, the downlink data is sent to the processor 1110 for processing. In addition, uplink data is sent to the network-side device. Generally, the radio frequency unit 1101 includes, but is not limited to, an antenna, at least one amplifier, a transceiver, a coupler, a low noise amplifier, a duplexer, and the like.

The memory 1109 is configured to store a software program or instruction and other data. The memory 1109 may mainly include a program or instruction storage area and a data storage area, where the program or instruction storage area may store an operating system, an application program or instruction for at least one function (e.g., a sound playback function and an image playback function), and the like. In addition, the memory 1109 may include a high-speed random access memory, and may also include a non-transient memory, where the non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device or other non-transient solid-state storage devices.

The processor 1110 may include one or more processing units. Optionally, the processor 1110 may integrate an application processor and a modem processor, where the application processor mainly processes an operating system, a user interface, an application program or instruction, and the like, and the modem processor mainly processes wireless communication, e.g., a baseband processor. It can be understood that, the modem processor may be alternatively not integrated into the processor 1110.

The radio frequency unit 1101 is configured to:
send a first request to a second terminal, where the first request is used for requesting to borrow a target capability from the second terminal, and the target capability includes at least part of a first capability of the second terminal;
receive feedback information returned from the second terminal, where the feedback information indicates that the second terminal agrees to lend at least part of the target capability; and
report changed capability information of the first terminal to a network-side device based on a first capability of the first terminal and the borrowed at least part of the target capability.

Optionally, the radio frequency unit 1101 is further configured to send a second request to the network-side device before sending a first request to a second terminal, where the second request is used for requesting a change in the first capability of the first terminal.

Optionally, the second request carries identification information of the second terminal.

Optionally, the radio frequency unit 1101 is further configured to receive a response message returned from the network-side device before sending the first request to the second terminal, where the response message indicates at least one of the following: the range of change in the first capability of the first terminal, and the range of a capability that the second terminal can lend.

Optionally, the sum of the first capability of the first terminal and the requested target capability is within the range of change; and/or, the target capability requested by the first request is within the range of the capability.

Optionally, the first capability includes one of the following: an antenna capability and a hardware processing capability.

Optionally, the antenna capability includes at least one of the following:
a quantity of receive antennas;
a quantity of transmit antennas;
data of transceiver antennas; and
a quantity of multiple-input multiple-output (MIMO) layers.

Or, the radio frequency unit 1101 is configured to:
receive the first request sent from the first terminal, where the first request is used for requesting to borrow a target capability from the second terminal, and the target capability includes at least part of a first capability of the second terminal; and
return feedback information to the first terminal, where the feedback information indicates one of the following that: the second terminal rejects the request of the first terminal, and the second terminal agrees to lend at least part of the target capability.

Optionally, the radio frequency unit 1101 is further configured to send indication information to the network-side device in a case that the second terminal agrees to lend at least part of the target capability, where the indication information indicates a reduction in the first capability of the second terminal, and the indication information indicates the capability value of the at least part of the target capability.

Optionally, the radio frequency unit 1101 is further configured to receive feedback confirmation returned from the network-side device after sending the indication information to the network-side device.

Optionally, the processor 1110 is configured to acquire configuration information before the first terminal returns the feedback information, where the configuration information includes a variable range of the first capability of the second terminal.

Optionally, the processor 1110 is further configured to send a capability change request to the network-side device based on the first capability of the second terminal, the variable range and the target capability requested by the first request before the first terminal returns the feedback information, where the capability change request is used for requesting for reducing the first capability of the second terminal; and
the radio frequency unit 1101 is further configured to receive a reconfiguration message from the network-side device, and perform reconfiguration based on the reconfiguration message.

Optionally, the processor 1110 is further configured to return the feedback information to the first terminal based on the first capability of the second terminal and the reconfiguration message before the first terminal returns the feedback information.

Optionally, the feedback information further indicates the capability value lent to the first terminal in a case that the second terminal agrees to lend at least part of the target capability.

An embodiment of this application further provides a network-side device, including a processor and a communication interface, where the processor is configured to implement the processes in the embodiment of the above capability change method 400, and the communication interface is configured to communicate with an external device. This network-side device embodiment corresponds to the above network-side device method embodiment, and the implementation process and method of the above method embodiment are all applicable to this network-side device embodiment, and the same technical effects can be achieved.

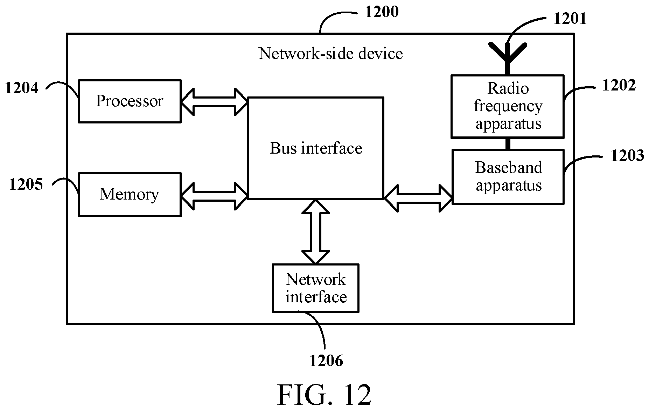

Specifically, this embodiment of this application further provides the network-side device. As shown in FIG. 12, the network-side device 1200 includes: an antenna 1201, a radio frequency apparatus 1202 and a baseband apparatus 1203. The antenna 1201 is connected with the radio frequency apparatus 1202. In an uplink direction, the radio frequency apparatus 1202 receives information via the antenna 1201 and sends the received information to the baseband apparatus 1203 for processing. In a downlink direction, the baseband apparatus 1203 processes the information to be sent and sends the processed information to the radio frequency apparatus 1202, and the radio frequency apparatus 1202 processes the received information and then sends the processed information out via the antenna 1201.

A frequency band processing apparatus may be located in the baseband apparatus 1203. The method implemented by the network-side device in the above embodiment may be implemented in the baseband apparatus 1203. The baseband apparatus 1203 includes a processor 1204 and a memory 1205.

The baseband apparatus 1203, for example, may include at least one baseband board, multiple chips are arranged on the baseband board, as shown in FIG. 12, where one chip, for example, the processor 1204, is connected to the memory 1205 and used for calling programs in the memory 1205 and perform network device operations as shown in the above method embodiment.

The baseband apparatus 1203 may further include a network interface 1206 configured to exchange information with the radio frequency apparatus 1202. The interface may be a common public radio interface (common public radio interface, CPRI).

Specifically, the network-side device in this embodiment of the present invention further includes: an instruction or program stored in the memory 1205 and executable on the processor 1204, where the processor 1204 may call the instruction or program in the memory 1205 to execute the method executed by the modules shown in FIG. 9 and achieve the same technical effects. Details will not be repeated here to avoid repetition.

An embodiment of this application further provides a readable storage medium, storing a program or instruction on the readable storage medium, where the program or instruction, when executed by a processor, implements the processes in the embodiment of the above capability change method 200, 300 or 400, and the same technical effects can be achieved. Details will not be repeated here to avoid repetition.

The processor is the processor in the terminal in the above embodiment. The readable storage medium includes a computer-readable storage medium, such as a read-only memory (Read-Only Memory, ROM), a random access memory (Random Access Memory, RAM), a magnetic disk, an optical disc, or the like.

An embodiment of this application further provides a chip, including a processor and a communication interface, where the communication interface is coupled with the processor, and the processor is configured to execute a program or instruction to implement the processes in the embodiment of the above capability change method 200, 300 or 400, and the same technical effects can be achieved. Details will not be repeated here to avoid repetition.

It is to be understood that the chip mentioned in this embodiment of this application may also be referred to as a system level chip, a system chip, a chip system, an on-chip system chip, or the like.

An embodiment of this application further provides a computer program/program product, where the computer program/program product is stored in a non-transient storage medium, and the program/program product, when executed by at least one processor, implements the processes in the embodiment of the above capability change method 200, 300 or 400, and the same technical effects can be achieved. Details will not be repeated here to avoid repetition.

It is to be noted that in this application, the terms "include", "comprise", or any other variants thereof are intended to encompass non-exclusive inclusion, such that a process, method, article or apparatus that includes a series of elements not only includes those elements, but also includes other elements that are not explicitly listed, or also includes inherent elements of such a process, method, article or apparatus. Without more restrictions, the element defined by the sentence "include one ..." does not exclude that there are other identical elements in a process, method, article or apparatus including the element. In addition, it is to be noted that the scope of the methods and apparatuses in the implementations of this application is not limited to perform functions in the order shown or discussed, but may also include performing functions in a substantially simultaneous manner or in a reverse order according to the functions involved. For example, the described method may be implemented in an order different from the described order, and the steps may be added, omitted or combined. In addition, features described with reference to some examples may be combined in other examples.

Through the descriptions of the foregoing implementations, those skilled in the art may clearly understand that the methods in the foregoing embodiments may be implemented by means of software and a necessary general hardware platform, and certainly, may also be implemented by hardware, but in many cases, the former is a better implementation. Based on such an understanding, the technical solutions in this application essentially, or the part contributing to the prior art, may be presented in the form of a computer software product. The computer software product is stored in a storage medium (e.g., an ROM/RAM, a magnetic disk, or an optical disc) including several instructions to enable a terminal (a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not restrictive. Those of ordinary skill in the art may make various variations under the teaching of this application without departing from the spirit of this application and the protection scope of the claims, and such variations shall all fall within the protection scope of this application.

## Claims

1. A capability change method, comprising:
sending, by a first terminal, a first request to a second terminal, the first request being used for requesting to borrow a target capability from the second terminal, and the target capability comprising at least part of a first capability of the second terminal;
receiving, by the first terminal, feedback information returned from the second terminal, the feedback information indicating that the second terminal agrees to lend at least part of the target capability; and
reporting, by the first terminal, changed capability information of the first terminal to a network-side device based on a first capability of the first terminal and the borrowed at least part of the target capability.

2. The method according to claim 1, wherein before the sending, by a first terminal, a first request to a second terminal, the method further comprises:
sending, by the first terminal, a second request to the network-side device, the second request being used for requesting a change in the first capability of the first terminal.

3. The method according to claim 2, wherein the second request carries identification information of the second terminal.

4. The method according to claim 3, wherein before the sending, by a first terminal, a first request to a second terminal, the method further comprises:
receiving a response message returned from the network-side device, the response message indicating at least one of the following: a range of change in the first capability of the first terminal, and a range of a capability that the second terminal can lend.

5. The method according to claim 4, wherein
a sum of the first capability of the first terminal and a requested target capability is within the range of change; and/or,
the target capability requested by the first request is within the range of the capability.

6. The method according to any one of claims 1 to 5, wherein the first capability comprises one of the following: an antenna capability and a hardware processing capability.

7. The method according to claim 6, wherein the antenna capability comprises at least one of the following:
a quantity of receive antennas;
a quantity of transmit antennas;
data of transceiver antennas; and
a quantity of multiple-input multiple-output (MIMO) layers.

8. A capability change method, comprising:
receiving, by a second terminal, a first request sent from a first terminal, the first request being used for requesting to borrow a target capability from the second terminal, and the target capability comprising at least part of a first capability of the second terminal;
returning, by the second terminal, feedback information to the first terminal, the feedback information indicating one of the following that: the second terminal rejects the request of the first terminal, and the second terminal agrees to lend at least part of the target capability.

9. The method according to claim 8, wherein in a case that the second terminal agrees to lend at least part of the target capability, the method further comprises:
sending, by the second terminal, indication information to a network-side device, wherein the indication information indicating a reduction in the first capability of the second terminal, and the indication information indicating a capability value of the at least part of the target capability.

10. The method according to claim 9, wherein after the sending, by the second terminal, indication information to the network-side device, the method further comprises:
receiving, by the second terminal, feedback confirmation returned from the network-side device.

11. The method according to claim 8, wherein before the returning, by the second terminal, feedback information to the first terminal, the method further comprises:
acquiring, by the second terminal, configuration information, the configuration information comprising a variable range of the first capability of the second terminal.

12. The method according to claim 11, wherein before the returning, by the second terminal, feedback information to the first terminal, the method further comprises:
sending, by the second terminal, a capability change request to the network-side device based on the first capability of the second terminal, the variable range and the target capability requested by the first request, the capability change request being used for requesting for reducing the first capability of the second terminal; and
receiving, by the second terminal, a reconfiguration message from the network-side device, and performing reconfiguration based on the reconfiguration message.

13. The method according to claim 12, wherein before the returning, by the second terminal, feedback information to the first terminal, the method further comprises:
determining, by the second terminal, the feedback information returned to the first terminal based on the first capability of the second terminal and the reconfiguration message.

14. The method according to any one of claims 8 to 13, wherein the feedback information further indicates a capability value lent to the first terminal in a case that the second terminal agrees to lend at least part of the target capability.

15. A capability change method, comprising:
receiving, by a network-side device, changed capability information reported by a first terminal, the changed capability information comprising: a first capability of the first terminal, and at least part of a first capability borrowed by the first terminal from a second terminal.

16. The method according to claim 15, wherein after the receiving, by a network-side device, changed capability information reported by a first terminal, the method further comprises:
reconfiguring, by the network-side device, the first terminal based on the changed capability information.

17. The method according to claim 15, wherein before the receiving, by a network-side device, changed capability information reported by a first terminal, the method further comprises:
receiving, by the network-side device, a second request sent from the first terminal, the second request being used for requesting a change in the first capability of the first terminal, and the second request carrying identification information of the second terminal.

18. The method according to claim 17, wherein after the receiving, by the network-side device, a second request sent from the first terminal, the method further comprises:
returning, by the network-side device, a response message to the first terminal, the response message indicating at least one of the following: a range of change in the first capability of the first terminal, and a range of a capability that the second terminal can lend.

19. The method according to claim 15, wherein before the receiving, by a network-side device, changed capability information reported by a first terminal, the method further comprises:
receiving indication information sent from the second terminal, the indication information indicating a reduction in the first capability of the second terminal, and the indication information indicating a capability value of the at least part of the target capability; and
returning feedback confirmation to the second terminal.

20. The method according to claim 15, wherein before the receiving, by a network-side device, changed capability information reported by a first terminal, the method further comprises:
configuring, by the network-side device, configuration information of the second terminal, the configuration information comprising a variable range of the first capability of the second terminal.

21. The method according to claim 20, wherein before the receiving, by a network-side device, changed capability information reported by a first terminal, the method further comprises:
receiving a capability change request sent from the second terminal, the capability change request being used for requesting for reducing the first capability of the second terminal; and
sending a reconfiguration message to the second terminal based on the capability change request, the reconfiguration message being used for reconfiguring the first capability of the second terminal.

22. The method according to any one of claims 15 to 21, wherein the method further comprises:
releasing connection of the second terminal in a case that the first terminal borrows all the first capability from the second terminal.

23. A capability change apparatus, comprising:
a first sending module, configured to send a first request to a second terminal, the first request being used for requesting to borrow a target capability from the second terminal, and the target capability comprising at least part of a first capability of the second terminal;
a first receiving module, configured to receive feedback information returned from the second terminal, the feedback information indicating that the second terminal agrees to lend at least part of the target capability; and
a reporting module, configured to report changed capability information of the first terminal to a network-side device based on a first capability of the first terminal and a borrowed at least part of the target capability.

24. The apparatus according to claim 23, wherein the first sending module is further configured to: send a second request to the network-side device before sending a first request to a second terminal, the second request being used for requesting a change in the first capability of the first terminal.

25. The apparatus according to claim 24, wherein the first receiving module is further configured to: receive a response message returned from the network-side device, the response message indicating at least one of the following: a range of change in the first capability of the first terminal, and a range of a capability that the second terminal can lend.

26. The apparatus according to any one of claims 22 to 24, wherein the first capability comprises one of the following: an antenna capability and a hardware processing capability.

27. The apparatus according to claim 26, wherein the antenna capability comprises at least one of the following:
a quantity of receive antennas;
a quantity of transmit antennas;
data of transceiver antennas; and
a quantity of multiple-input multiple-output (MIMO) layers.

28. A capability change apparatus, comprising:
a second receiving module, configured to receive a first request sent from a first terminal, the first request being used for requesting to borrow a target capability from the second terminal, and the target capability comprising at least part of a first capability of the second terminal; and
a second sending module, configured to return feedback information to the first terminal, the feedback information indicating one of the following: rejection to the request of the first terminal, and agreement to lend at least part of the target capability.

29. The apparatus according to claim 28, wherein the second sending module is further configured to send indication information to the network-side device in a case that the second terminal agrees to lend at least part of the target capability, the indication information indicating a reduction in the first capability of the second terminal, and the indication information indicating a capability value of the at least part of the target capability.

30. The apparatus according to claim 29, wherein the second receiving module is further configured to receive feedback confirmation returned from the network-side device.

31. The apparatus according to claim 28, wherein the apparatus further comprises:
a first acquiring module, configured to acquire configuration information, the configuration information comprising a variable range of the first capability of the second terminal.

32. The apparatus according to claim 31, wherein
the second sending module is further configured to send a capability change request to the network-side device based on the first capability of the second terminal, the variable range and the target capability requested by the first request, the capability change request being used for requesting for reducing the first capability of the second terminal; and
the second receiving module is further configured to receive a reconfiguration message from the network-side device, and perform reconfiguration based on the reconfiguration message.

33. The apparatus according to claim 32, wherein returning, by the second sending module, feedback information to the first terminal comprises:
returning the feedback information to the first terminal based on the first capability of the second terminal and the reconfiguration message.

34. The apparatus according to any one of claims 28 to 33, wherein the feedback information further indicates a capability value lent to the first terminal in a case that the second terminal agrees to lend at least part of the target capability.

35. A capability change apparatus, comprising:
a third receiving module, configured to receive changed capability information reported by a first terminal, the changed capability information comprising: a first capability of the first terminal, and at least part of a first capability borrowed by the first terminal from a second terminal; and
a second acquiring module, configured to acquire the changed capability information of the first terminal.

36. The apparatus according to claim 35, wherein the apparatus further comprises:
a reconfiguration module, configured to reconfigure the first terminal based on the changed capability information.

37. The apparatus according to claim 35, wherein the third receiving module is further configured to receive a second request sent from the first terminal before receiving changed capability information reported by the first terminal, the second request being used for requesting a change in the first capability of the first terminal, and the second request carrying identification information of the second terminal.

38. The apparatus according to claim 37, wherein the apparatus further comprises:
a third sending module, configured to return a response message to the first terminal, the response message indicating at least one of the following: a range of change in the first capability of the first terminal, and a range of a capability that the second terminal can lend.

39. The apparatus according to claim 38, wherein
the third receiving module is further configured to receive indication information sent from the second terminal before receiving changed capability information reported by the first terminal, the indication information indicating a reduction in the first capability of the second terminal, and the indication information indicating the capability value of the at least part of the target capability; and
the third sending module is further configured to return feedback confirmation to the second terminal.

40. The apparatus according to claim 36, wherein the reconfiguration module is further configured to configure configuration information of the second terminal, the configuration information comprising a variable range of the first capability of the second terminal.

41. The apparatus according to claim 40, wherein
the third receiving module is further configured to receive a capability change request sent from the second terminal, the capability change request being used for requesting for reducing the first capability of the second terminal; and
the reconfiguration module is further configured to send a reconfiguration message to the second terminal based on the capability change request, the reconfiguration message being used for reconfiguring the first capability of the second terminal.

42. The apparatus according to any one of claims 35 to 41, wherein the apparatus further comprises:
a release module, configured to release connection of the second terminal in a case that the first terminal borrows all the first capability from the second terminal.

43. A terminal, comprising a processor, a memory, and a program or instruction stored on the memory and executable on the processor, the program or instruction, when executed by the processor, implementing the steps of the capability change method according to any one of claims 1 to 14.

44. A network-side device, comprising a processor, a memory, and a program or instruction stored on the memory and executable on the processor, the program or instruction, when executed by the processor, implementing the steps of the capability change method according to any one of claims 15 to 22.

45. A readable storage medium, storing a program or instruction on the readable storage medium, the program or instruction, when executed by a processor, implementing the steps of the capability change method according to any one of claims 1 to 14, or implementing the steps of the capability change method according to any one of claims 15 to 22.
